# FASCICULE DE BREVET EUROPEEN

(11) **EP 0 526 260 B1**
(45) Date de publication et mention de la délivrance du brevet: **28.12.1994**
(21) Numéro de dépôt: 92401187.7
(22) Date de dépôt: 24.04.1992
(51) Int. Cl.: F04B 43/02, F16C 11/02, F04B 9/04

(54) **Pompe d'alimentation à membrane à levier de commande articulé**
Membranförderpumpe mit gelenktem Antriebshebel
Membrane feed pump with articulated driving lever

(30) Priorité: 29.07.1991 FR 9109599
(43) Date de publication de la demande: 03.02.1993
(73) Titulaire: RIVAPOMPE Société Anonyme dite:, F-92400 Courbevoie (FR)
(72) Inventeur: Constantinidis, Stéphane, F-93130 Taverny (FR)
(74) Mandataire: Jolly, Jean-Pierre

(56) Documents cités:
- DE-A- 2 658 092
- FR-A- 1 382 493
- FR-A- 2 124 020
- GB-A- 2 049 798
- US-A- 2 534 998
- US-A- 3 977 044

## Description

La présente invention concerne une pompe d'alimentation à membrane et plus particulièrement un système d'articulation du levier de commande de ladite pompe d'alimentation à membrane.

Habituellement, la fixation d'un axe de pivotement sur un support s'effectue par emmanchement serré à travers deux trous traversant de part en part deux parois parallèles du support. Cependant, l'étanchéité d'un tel assemblage au niveau des trous n'est pas garantie, en particulier dans le cas de l'axe d'articulation d'un levier de commande d'une pompe d'alimentation d'un moteur. Dans ce cas en effet, en raison des variations de température de fonctionnement et de la différence des coefficients de dilatation respectifs des matériaux constituant l'axe et le support, il peut apparaître des jeux donnant lieu à des fuites.

Par le brevet FR-A- 2 124 020, on connaît une pompe à membrane munie d' un système d'articulation de l'axe du levier de commande selon le préambule de revendication 1.

Selon ce brevet, les bords des glissières se prolongent par des lèvres déformables. Après avoir introduit les extrémités de l'axe au fond des deux glissières, on effectue un sertissage latéral en déformant les lèvres pour qu'elles emprisonnent les extrémités de l'axe.

Par le brevet FR 2 516 424, on connaît un système d'articulation analogue au précédent et dans lequel la fixation de l'axe est améliorée en effectuant en outre, un sertissage axial par application sur les faces externes desdites parois parallèles de deux forces axiales de sens opposés.

Le procédé de fixation selon ces deux brevets est difficile à mettre en oeuvre car il nécessite un outillage compliqué et relativement coûteux, à savoir des poinçons pour réaliser le sertissage axial, un outil pour le serrage des lèvres. De plus, au cours de leur déformation, les lèvres risquent de se briser. On doit alors prendre des précautions particulières pour éviter cela, par exemple, en formant des empreintes sous forme de stries croisées, sur la face d'attaque de l'outil de serrage des lèvres.

La présente invention vise à remédier à ces inconvénients en proposant une pompe d'alimentation à membrane selon la revendication 1.

Grâce à la forme tronconique des pivots et des trous borgnes, on obtient une adaptation parfaitement étanche de l'axe sur le corps de pompe.

D'autres caractéristiques et avantages de l'invention ressortiront de la description d'un mode de réalisation qui va suivre, faite en regard des dessins annexés dans lesquels :
- la figure 1 est une vue en élévation du corps inférieur de la pompe d'alimentation ;
- la figure 2 est une vue en coupe longitudinale du levier de commande et de son axe de pivotement ;
- la figure 3 montre une vue en coupe axiale agrandie de l'axe muni de ses pivots et de son ressort ;
- la figure 4 est une vue en élévation partiellement en coupe d'un pivot ;
- la figure 5 est une vue en coupe selon la ligne IV-IV de la figure 1 avec l'ensemble levier-axe prêt à être assemblé au corps inférieur ;
- la figure 6 est une vue en coupe analogue à celle de la figure 4, l'ensemble étant en position assemblée, et
- la figure 7 est une vue partiellement en coupe d'un levier en deux pièces.

On ne décrira ci-après que les éléments de la pompe à membrane nécessaires à la compréhension de l'invention.

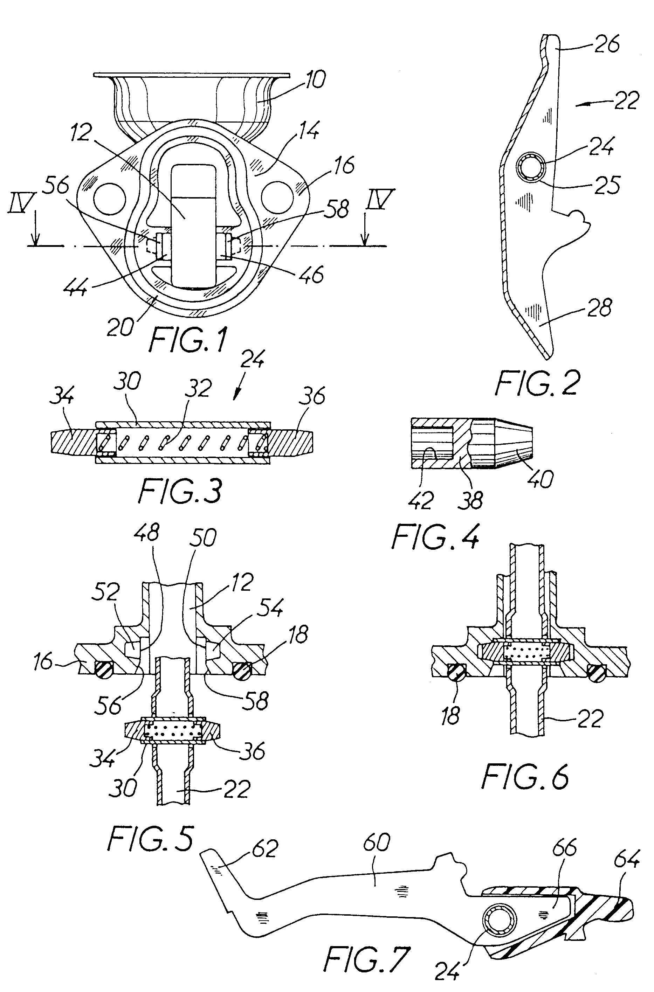

Comme le montre la figure 1, la pompe comprend un corps inférieur creux 10 dont la cavité 12 débouche sur une face plate 14 munie d'une bride 16 destinée à l'assemblage du corps inférieur sur une paroi du moteur du véhicule. L'étanchéité de l'assemblage est garantie par un joint annulaire 18 inséré dans une rainure périphérique 20 qui entoure la cavité 12.

De façon connue en soi, un levier de commande 22 représenté à la figure 2 transmet le mouvement de la came motrice à la membrane de la pompe. A cet effet, le levier est monté pivotant dans la cavité 12 autour d'un axe 24 qui traverse un perçage 25 du levier. L'axe détermine sur le levier une partie 26 intérieure au corps 10 et une partie 28 extérieure au corps, dont les extrémités coopèrent respectivement avec la membrane et avec la came motrice.

L'axe 24 comprend un élément tubulaire 30 dans lequel est logé un ressort hélicoïdal 32. Aux extrémités de l'élément tubulaire sont montés coulissants deux pivots 34, 36. Chacun de ces derniers comprend à cet effet une portion cylindrique 38 qui coulisse dans l'élément tubulaire et une portion tronconique 40 qui fait normalement saillie à l'extérieur de l'élément tubulaire. Les pivots présentent à l'extrémité de leur portion cylindrique une cavité 42 destinée à recevoir les extrémités du ressort 32.

Sur la face plate 14, la cavité 12 a une section rectangulaire. Sur les deux côtés longitudinaux de cette cavité sont formées deux glissières semi-cylindriques 44, 46 de même diamètre que l'élément tubulaire 30 et s'ouvrant sur ladite face plate. Les parois latérales 48, 50 desdites glissières présentent respectivement deux trous borgnes tronconiques 52, 54 de même conicité que les portions tronconiques des pivots 34, 36.

L'écart entre les parois latérales 48, 50 est très légèrement supérieur à la longueur de l'élément tubulaire 30, de manière que celui-ci puisse être inséré entre lesdites parois.

Pour faciliter l'assemblage de l'axe au corps inférieur 10, les parois latérales 48, 50 sont chanfreinées sur leur bord d'entrée 56, 58.

L' assemblage du levier sur le corps inférieur s'effectue manuellement ou automatiquement, de la façon suivante : l'axe étant pré-assemblé comme représenté sur la figure 3, on l'introduit dans le perçage 25 du levier. On comprime ensuite le ressort 32 par pression simultanée sur les pivots 34, 36, de manière que la longueur totale de l'axe devienne légèrement plus petite que la cote d'entrée des bords chanfreinés 56, 58. Les pivots peuvent alors être relâchés puisqu'ils seront désormais guidés par les glissières 44, 46. On pousse ensuite l'ensemble vers l'intérieur de la cavité 12 jusqu'à ce que l'élément tubulaire 30 vienne en butée au fond des glissières 44, 46.

Sous l'action du ressort 32, les pivots 34, 36 s'encliquettent à l'intérieur des trous 52, 54. Ces derniers ont une profondeur supérieure à la longueur des portions tronconiques 40. Il en résulte que les pivots s'adaptent sans jeu à l'intérieur desdits trous. On obtient ainsi un assemblage parfaitement étanche au niveau de l'axe.

Ce mode d'assemblage présente l'avantage par rapport à la technique connue décrite précédemment de ne nécessiter aucune opération mécanique de sertissage. Il convient donc particulièrement aux cas où le corps de pompe est en une matière composite, mais il va de soi qu'il peut être aussi bien utilisé dans le cas où le corps de pompe est en métal ou en alliage.

De plus, grâce à ce mode d'assemblage, le levier et son axe sont indémontables et ne peuvent donc jamais se désolidariser.

Il va de soi que de nombreuses modifications de détail peuvent être apportées au mode de réalisation qui vient d'être décrit. Par exemple, comme le montre la figure 7, le levier peut être réalisé en deux parties indépendantes, que l'on assemble au moyen de l'axe 24. La première partie ou partie extérieure 60 est en contact par une extrémité 62 avec la came motrice. Elle peut être réalisée en un seul flan d'acier d'épaisseur constante. L'extrémité 62 dudit flan est découpée de manière à s'adapter au profil particulier de la came. Grâce à cette conception, on réduit les nombreux outillages utilisés jusqu'à présent à un seul outil pour la fabrication de la partie extérieure 60 du levier.

La seconde partie ou partie intérieure 64 du levier est élaborée par moulage d'une matière composite ayant de bonnes qualités mécaniques et une bonne résistance aux hydrocarbures, à la chaleur et au grand froid. Cette partie intérieure est de structure plate et creuse de manière à pouvoir y emboîter la seconde extrémité 66 de la partie extérieure 60.

La première et la seconde parties 60 et 64 du levier comportent des trous respectifs qui, lorsque lesdites parties sont assemblées, viennent en coïncidence. L'axe 24 est introduit à travers lesdits trous en coïncidence pour solidariser lesdites parties.

La réalisation de ladite partie intérieure 64 en matière composite a pour avantage de rompre la chaîne de transmission de chaleur le long du levier, comme c'était le cas pour les leviers en une seule pièce entièrement en métal, et d'éviter toute manifestation sonore anormale.

## Revendications

1. Pompe d'alimentation à membrane comprenant un corps de pompe pourvu d'un corps inférieur creux (10) qui présente une cavité (12) débouchant à l'extérieur du corps inférieur, sur une face plate (14), par une ouverture à travers laquelle pénètre une extrémité d'un levier de commande (22; 60, 64) qui sert à entraîner la membrane en mouvement alternatif, ledit levier de commande étant articulé au corps inférieur au moyen d'un axe cylindrique (24) qui traverse le levier et dont les extrémités sont reçues dans deux glissières parallèles entre elles, semi-cylindriques, de même diamètre que l'axe et situées sur deux parois latérales de ladite ouverture, écartées d'une distance légèrement supérieure à la longueur de l'axe, caractérisée en ce que l'axe est constitué par un élément tubulaire (30) dans lequel est logé un ressort de compression (32) dont les extrémités prennent appui sur deux pivots cylindriques (34,36) montés coulissants dans les extrémités de l'élément tubulaire, lesdits pivots comprenant des parties terminales tronconiques (40) faisant saillie à l'extérieur de l'élément tubulaire et qui sont susceptibles de s'encliqueter à l'intérieur de trous borgnes tronconiques (52, 54), de même conicité que les pivots, formés dans les parois latérales des glissières.

2. Pompe d'alimentation à membrane selon la revendication 1, caractérisé en ce que les bords d'entrée (56, 58) de la cavité (12) sur la face plate (14) soient chanfreinés.

3. Pompe d'alimentation à membrane selon la revendication 1, caractérisé en ce que les trous borgnes (52, 54) ont une profondeur supérieure à la longueur des parties tronconiques (40) des pivots.

4. Pompe d'alimentation à membrane selon la revendication 1, caractérisé en ce que le levier comprend deux parties indépendantes (60, 64) reliées entre elles au moyen de l'axe (24), à savoir une partie extérieure (60) réalisée en un seul flan d'acier, d'épaisseur constante, dont une extrémité (62) est découpée de manière à s'adapter au profil particulier de la came motrice d'un moteur, et une partie intérieure (64) élaborée par moulage d'une matière composite, de structure creuse de manière à pouvoir y emboîter la seconde extrémité (66) de la partie extérieure (60).

## Claims

1. A diaphragm feed pump comprising a pump body provided with a hollow lower body (10) which has a cavity (12) opening to the exterior of the lower body, at a flat face (14), by way of an opening through which passes an end of an actuating lever (22; 60, 64) which serves to produce an alternating movesent of the diaphragm, said actuating lever being pivoted to the lower body by means of a cylindrical spindle (24) which passes through the lever and the ends of which are received in two semi-cylindrical mutually parallel sliding guides of the same diameter as the spindle and disposed on two side walls of said opening which are spaced by a distance slightly greater than the length of the spindle characterised in that the spindle is formed by a tubular element (30) in which there is accommodated a compression spring (32) whose ends bear against two cylindrical pivots (34, 36) mounted slidably in the ends of the tubular element, said pivots comprising frustoconical terminal portions (40) which project to the exterior of the tubular element and which are capable of latching in the interior of frustoconical blind holes (52, 54) of the same conicity as the pivots and formed in the side walls of the sliding guides.

2. A diaphragm feed pump according to claim 1 characterised in that the entry edges (56, 58) of the cavity (12) on the flat face (14) are chamfered.

3. A diaphragm feed pump according to claim 1 characterised in that the blind holes (52, 54) are of a depth which is greater than the length of the frustoconical portions (40) of the pivots.

4. A diaphragm feed pump according to claim 1 characterised in that the lever comprises two independent portions (60, 64) which are connected to each other by means of the spindle (24), namely an external portion (60) which is made from a single blank of steel of constant thickness and of which one end (62) is cut to be matched to the particular profile of the drive cam of an engine, and an internal portion (64) which is produced by moulding of a composite material and of a hollow structure such as to permit the second end (66) of the external portion (60) to be fitted therein.

## Patentansprüche

1. Membranförderpumpe mit einem Pumpenkörper, der einen unteren hohlen Körper (10) aufweist, der eine Ausnehmung (12) besitzt, die sich vom unteren Körper nach außen hin zu einer flachen Seite (14) hin erstreckt mit einer Öffnung, durch die ein Ende eines Antriebshebels (22, 60, 64) eingreift, der die Membrane in eine hin- und hergehende Bewegung versetzt, wobei dieser Antriebshebel an dem unteren Körper (10) mittels einer zylindrischen Achse (24) angelenkt ist, die den Antriebshebel durchquert und deren Enden in zwei zueinander parallelen Gleitlagern aufgenommen werden, die halbzylindrisch ausgebildet sind, den gleichen Durchmesser aufweisen, wie die Achse (24) und die an zwei seitlichen Wänden der Öffnung gelagert sind, wobei sie voneinander entfernt sind über eine Distanz, die größer ist als die Länge der Achse (24),
dadurch gekennzeichnet, daß die Achse (24) durch ein rohrförmiges Element (30) gebildet wird, in welchem eine Kompressionsfeder (32) angeordnet ist, deren Enden sich an zwei zylindrischen Zapfen (34) und (36) abstützen, die gleitend in den Enden des rohrförmigen Elementes (30) gelagert sind, wobei die Zapfen konische Endteile (40) aufweisen, die nach außen über das rohrförmige Element (30) vorstehen und die in der Lage sind, in das Innere von kegelstumpfförmig ausgebildeten Blindlöchern (52, 54) einzugreifen, die die gleiche Konizität wie die Zapfen (34, 36) aufweisen und die in den seitlichen Wandungen der Gleitlager ausgebildet sind.

2. Membranförderpumpe nach Anspruch 1, dadurch gekennzeichnet, daß die Eintrittskanten (56, 58) der Ausnehmungen (12) auf der ebenen Fläche (14) angefast sind.

3. Membranförderpumpe nach Anspruch 1, dadurch gekennzeichnet, daß die Blindbohrungen (52, 54) eine Tiefe aufweisen, die größer ist als die kegelstumpfförmigen Bereiche (40) der Zapfen (36).

4. Membranförderpumpe nach Anspruch 1, dadurch gekennzeichnet, daß der Antriebshebel zwei voneinander unabhängige Teile (60, 64) aufweist, die miteinander über die zylindrische Achse (24) verbunden sind, und zwar ein äußeres Teil (60), das aus einer einzigen Stahlplatine besteht, die gleiche Dicke aufweist, deren eines Ende (62) in Anpassung an das Profil des Antriebsnockens eines Motors abgeschnitten ist und einem inneren Teil (64), das aus verformbarem Werkstoff hergestellt ist, hohl ausgebildet ist und so auf das zweite Ende (66) des äußeren Teiles (60) aufgesetzt werden kann.
